(19) Europäisches Patentamt
European Patent Office
Office européen des brevets

(11) **EP 4 557 626 A1**

(12) **EUROPEAN PATENT APPLICATION**
published in accordance with Art. 153(4) EPC

(43) Date of publication:
**21.05.2025  Bulletin 2025/21**

(21) Application number: **23839862.2**

(22) Date of filing: **04.07.2023**

(51) International Patent Classification (IPC):
*H04B 7/06* (2006.01)     *H04W 74/08* (2024.01)
*H04W 74/00* (2009.01)     *H04B 7/0408* (2017.01)
*H04W 24/08* (2009.01)     *H04L 1/08* (2006.01)

(52) Cooperative Patent Classification (CPC):
**H04B 7/0408; H04B 7/06; H04L 1/08; H04W 24/08;
H04W 74/00; H04W 74/08**

(86) International application number:
**PCT/KR2023/009394**

(87) International publication number:
**WO 2024/014768 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **15.07.2022  KR 20220087744**

(71) Applicant: **LG Electronics Inc.
Yeongdeungpo-gu
Seoul 07336 (KR)**

(72) Inventors:
• **SHIN, Seokmin**
  **Seoul 06772 (KR)**
• **KO, Hyunsoo**
  **Seoul 06772 (KR)**
• **KIM, Jaehyung**
  **Seoul 06772 (KR)**
• **YANG, Suckchel**
  **Seoul 06772 (KR)**
• **KIM, Seonwook**
  **Seoul 06772 (KR)**
• **PARK, Haewook**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND APPARATUS FOR UPLINK TRANSMISSION AND RECEPTION IN WIRELESS COMMUNICATION SYSTEM**

(57)     Disclosed are a method and apparatus for uplink transmission and reception in a wireless communication system. The method performed by the wireless communication system, according to an embodiment of the present disclosure, comprises the steps of: receiving, from a base station, configuration information associated with at least one of a specific threshold value or a specific number of times for physical random access channel (PRACH) preamble repeated transmission; and performing PRACH preamble repeated transmission associated with a first synchronization signal block (SSB) index on the basis of the configuration information, wherein stopping of the PRACH preamble repeated transmission associated with the first SSB index by a terminal may be allowed on the basis that a difference between first reference signal received power (RSRP) associated with the first SSB index and second RSRP associated with a second SSB index exceeds the specific threshold value.

FIG.9

RECEIVING CONFIGURATION INFORMATION ASSOCIATED WITH AT LEAST ONE OF A SPECIFIC THRESHOLD VALUE OR A SPECIFIC NUMBER OF TIMES FOR REPEATED TRANSMISSION OF A PRACH PREAMBLE FROM THE BASE STATION — S910

PERFORMING REPEATED TRANSMISSION OF A PRACH PREAMBLE ASSOCIATED WITH A FIRST SSB INDEX BASED ON THE CONFIGURATION INFORMATION — S920

**Description**

[Technical Field]

The present disclosure relates to a wireless communication system, and more specifically to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

In addition, an additional technical problem of the present disclosure is to provide a method and device for performing a beam operation for repeated transmission of a PRACH preamble.

In addition, an additional technical problem of the present disclosure is to provide a method and device for determining whether to repeatedly transmit a PRACH preamble according to a condition allowing stopping of repeated transmission of a PRACH preamble.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method performed by a user equipment (UE) in a wireless communication system may include receiving configuration information associated with at least one of a specific threshold value or a specific number of times for repeated transmission of a physical random access channel (PRACH) preamble from a base station; and performing repeated transmission of a PRACH preamble associated with a first synchronization signal block (SSB) index based on the configuration information, based on a difference between a first RSRP (reference signal received power) associated with the first SSB index and a second RSRP associated with a second SSB index exceeding the specific threshold, stopping of repeated transmission of the PRACH preamble associated with the first SSB index by the UE may be permitted.

According to another embodiment of the present disclosure, a method performed by a base station in a wireless communication system may include transmitting configuration information associated with at least one of a specific threshold value or a specific number of times for repeated transmission of a physical random access channel (PRACH) preamble to a user equipment (UE); and performing repeated reception of a PRACH preamble associated with a first synchronization signal block (SSB) index based on the configuration information, wherein based on a difference between a first RSRP (reference signal received power) associated with the first SSB index and a second RSRP associated with a second SSB index exceeding the specific threshold, stopping of repeated transmission of the PRACH preamble associated with the first SSB index by the UE may be permitted.

[Technical Effects]

According to an embodiment of the present disclosure, a method and device for performing uplink transmission and reception in a wireless communication system may be provided.

In addition, according to various embodiments of the present disclosure, a method and device for performing a beam operation for PRACH preamble repetitive transmission can be provided.

In addition, according to various embodiments of the present disclosure, a method and device for determining whether to transmit a PRACH preamble repeatedly according to a condition allowing PRACH preamble repetitive transmission to be stopped can be provided.

In addition, according to various embodiments of the present disclosure, since PRACH preamble repetitive transmission interruption is allowed only when a specific condition is satisfied, a problem of indiscriminate PRACH preamble repetitive transmission being interrupted can be solved.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates an example of a wireless communication system supporting an unlicensed band applicable to the present disclosure.

FIG. 8 is a diagram illustrating an uplink transmission and reception operation in a wireless communication system to which the present disclosure may be applied.

FIG. 9 is a diagram for explaining an uplink transmission operation of a UE in a wireless communication system to which the present disclosure may be applied.

FIG. 10 is a diagram for describing an uplink reception operation of a base station in a wireless communication system to which the present disclosure may be applied.

FIG. 11 is a diagram for describing a signaling procedure of a network side and a UE according to an embodiment of the present disclosure.

FIG. 12 is an exemplary block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, **"/"** between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI(Artificial Intelligence) system/module, an RSU(road side unit), a robot, a drone (UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information

- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC (massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

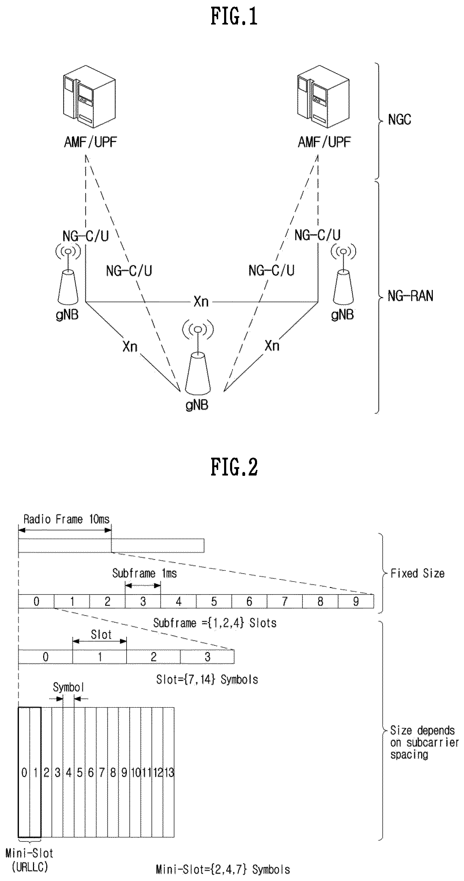

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\ \mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

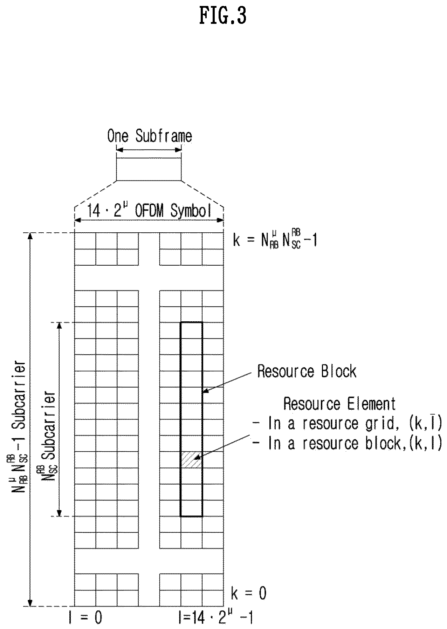

FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,...,$N_{RB}^{\mu} N_{sc}^{RB}$-1 is an index in a frequency domain and l'=0, ... , $2^{\mu} N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

- absoluteFrequencyPointA represents a frequency-position of point A expressed as in ARFCN (absolute radiofrequency channel number). Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

**【Equation 2】**

$$n^{\mu}_{CRB}=n^{\mu}_{PRB}+N^{start,\mu}_{BWP,i}$$

$N_{BWP,i}^{start,\mu}$ is a common resource block that a BWP starts relatively to common resource block 0.

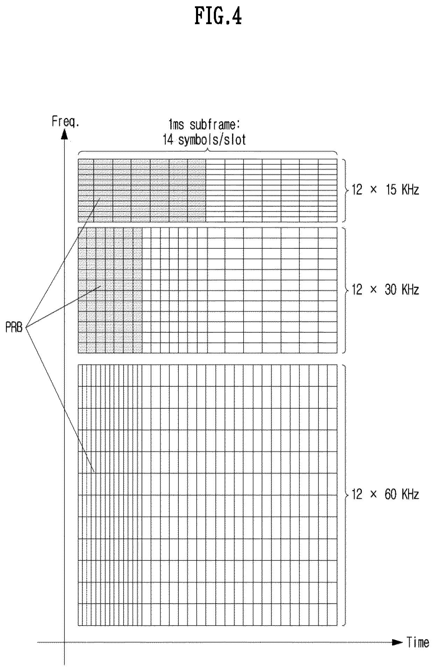

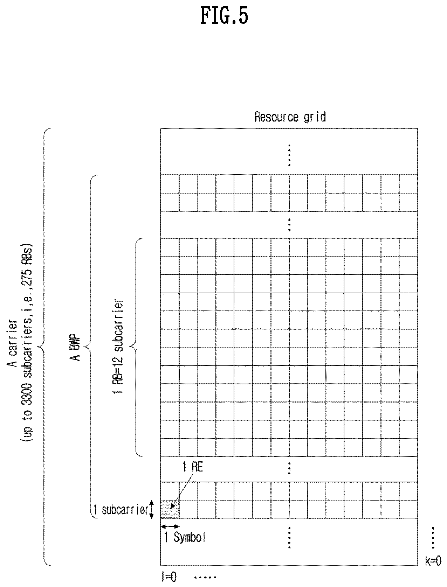

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

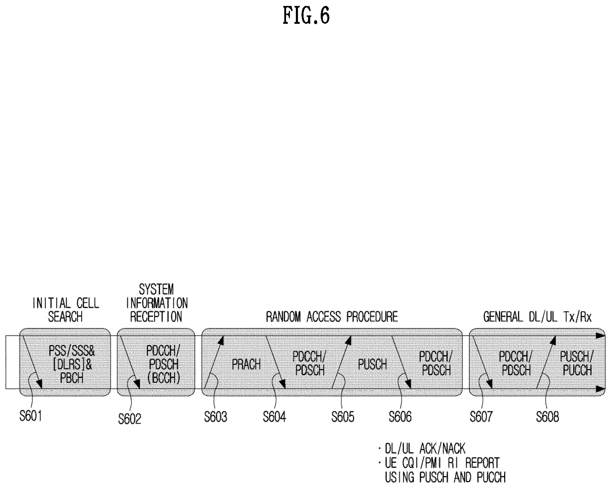

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel) /PUCCH (physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Wireless communication system supporting unlicensed band/shared spectrum

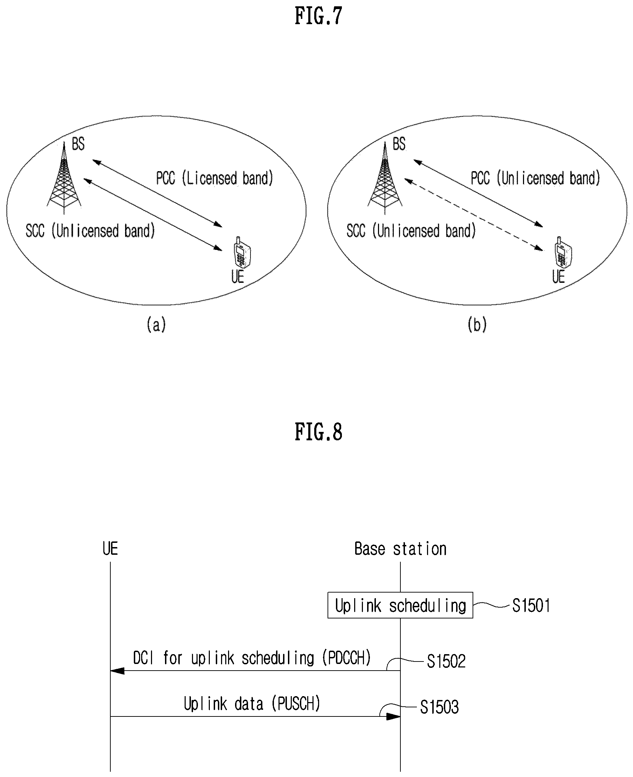

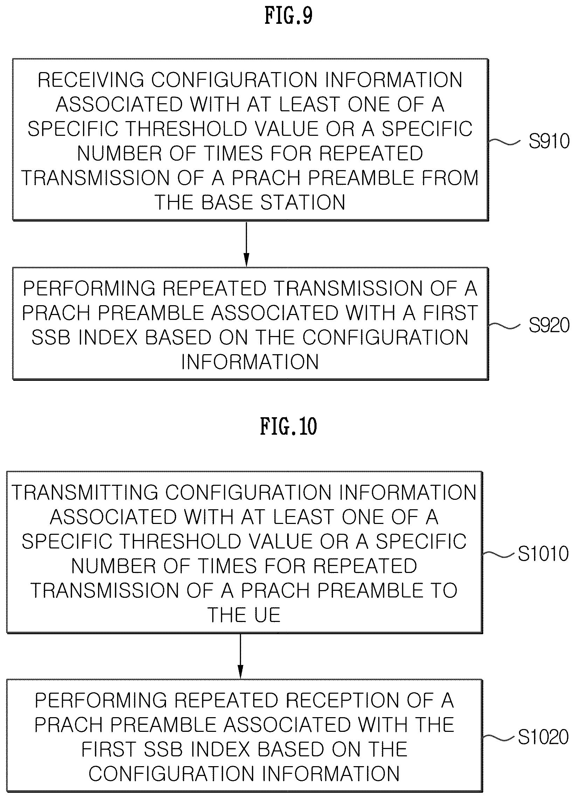

FIG. 7 shows an example of a wireless communication system supporting an unlicensed band applicable to the present disclosure. For example, FIG. 9 illustrates an unlicensed spectrum (NR-U) wireless communication system.

In the following description, a cell operating in a licensed-band (L-band) is defined as an LCell, and a carrier of the LCell is defined as a (downlink/uplink) LCC. In addition, a cell operating in an unlicensed band (U-band) is defined as a UCell, and a carrier of the UCell is defined as a (downlink/uplink) UCC. The carrier/carrier-frequency of a cell may mean an operating frequency (e.g., center frequency) of the cell. A cell/carrier (e.g., a component carrier (CC)) is collectively referred to as a cell.

As shown in (a) of FIG. 7, when a terminal and a base station transmit and receive signals through carrier aggregation (CA) LCC and UCC, the LCC may be configured as a primary CC (PCC) and the UCC may be configured as a secondary CC (SCC). And, as shown in (b) of FIG. 7, the terminal and the base station may transmit and receive signals through one UCC or a plurality of UCCs combined with carriers. That is, the terminal and the base station may transmit and receive signals only through UCC(s) without LCC. For standalone operation, PRACH, PUCCH, PUSCH, SRS transmission, etc. may be supported in UCell.

For example, the unlicensed band may be included in a specific frequency range (e.g., from 52.6 GHz to 71 GHz) higher than the existing frequency range (e.g., FR1 and FR2). The specific frequency range may be referred to as FR2-2 (in this case, the existing FR2 (i.e., 24250 MHz - 52600 MHz) may be referred to as FR2-1) or may be referred to as FR3. The scope of this disclosure is not limited to the designations FR2-2 or FR3.

Uplink transmission and reception operation

FIG. 8 is a diagram illustrating an uplink transmission and reception operation in a wireless communication system to which the present disclosure can be applied.

Referring to FIG. 8, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

DCI format 0_0, 0_1, or 0_2 may be used for uplink scheduling, and in particular, DCI format 0_1 includes the following information: an identifier for a DCI format, a UL/SUL (supplementary uplink) indicator, a bandwidth part indicator, a frequency domain resource assignment, a time domain resource assignment, a frequency hopping flag, a modulation and coding scheme (MCS), an SRS resource indicator (SRI), precoding information and number of layers, antenna port(s), an SRS request, a DMRS sequence initialization, a UL-SCH (Uplink Shared Channel) indicator

In particular, SRS resources configured in an SRS resource set associated with the higher upper layer parameter 'usage' may be indicated by an SRS resource indicator field. Additionally, the 'spatialRelationInfo' can be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission: codebook-based transmission and non-codebook-based transmission:

   i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured.

Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n).

ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator'.

A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

### PRACH repetition transmission and transmission power configuration method

In order to improve UL coverage of a basic wireless communication system, a PRACH preamble repetition transmission operation may be performed. When a terminal repeatedly transmits a PRACH preamble, a beam operation and/or power control method should be defined. Hereinafter, a beam operation method and a terminal reporting method of a terminal/base station when performing PRACH preamble repetition transmission (or/and Msg. 3 PUSCH repetition transmission) according to an embodiment of the present disclosure will be described.

The present disclosure may be applied in combination with the above-described contents (e.g., NR frame structure, RACH procedure, U-band system, etc.). In addition, the methods related to configuring PRACH transmission occasions to be described later may be equally applied to an uplink signal transmission and reception method.

For example, uplink transmission through methods related to PRACH transmission opportunity configuration described later may be performed in an L-cell and/or U-cell defined in an NR system or a U-Band system.

FIG. 9 is a diagram for describing an uplink transmission operation of a UE in a wireless communication system to which the present disclosure may be applied.

The UE may receive from the base station configuration information associated with at least one of a specific threshold value or a specific number of times for repeated transmission of a physical random access channel (PRACH) preamble (S910).

Here, the specific threshold value or the specific number of times may be information for determining a condition related to stopping the repeated transmission of the PRACH preamble by the UE. That is, the UE may receive, from the base station, configuration information related to at least one of the specific threshold value or the specific number of times related to the repeated transmission of the PRACH preamble.

Additionally, the UE may receive configuration information (i.e., parameters for repeated transmission of the PRACH preamble) including information indicating/configuring to perform repeated transmission of the PRACH preamble, the (maximum) number of repeated transmission of the PRACH preamble, information related to power of repeated transmission of the PRACH preamble, information about at least one RO/SSB through which the PRACH preamble is transmitted, etc. from the base station.

Here, the UE may simultaneously receive configuration information associated with at least one of a specific threshold value or a specific number of times and parameters for repeated transmission of the PRACH preamble. For example, configuration information associated with at least one of a specific threshold value or a specific number of times and parameters for repetition transmission of the PRACH preamble can be included in the same message (e.g., RRC message, SIB (system information block), MAC-CE, DCI, etc.).

As another example, i) configuration information associated with at least one of a specific threshold value or a specific number of times and ii) parameters for repetition transmission of the PRACH preamble may each be included in separate messages.

The UE may perform repeated transmission of a PRACH preamble associated with a first synchronization signal block (SSB) index based on the configuration information (S920).

Specifically, the UE may select a most preferred SSB among a plurality of SSBs, and select at least one RO among RO (RACH occasion) (s) corresponding to the selected SSB. The UE may perform repeated transmission of the PRACH preamble based on a parameter for repeated transmission of the PRACH preamble in the at least one selected RO.

Here, a condition for allowing PRACH preamble repetition transmission may be determined/configured/defined based on at least one of a specific threshold value or a specific number of times for repeated transmission of the PRACH preamble.

Here, the specific threshold may be, but is not limited to, a value less than a threshold associated with at least one RO selection for repeated transmission of PRACH preamble.

As an example of the present disclosure, stopping of repeated transmission of a PRACH preamble associated with a first SSB index by a UE may be permitted based on a difference between a first RSRP (reference signal received power) associated with a first SSB index and a second RSRP associated with a second SSB index exceeding a particular threshold.

That is, based on the difference between the first RSRP associated with the first SSB index and the second RSRP associated with the second SSB index being less than or equal to the specific threshold, the stopping of the repeated transmission of the PRACH preamble associated with the first SSB index by the UE may not be permitted.

Additionally or alternatively, the stopping of repeated transmission of the PRACH preamble associated with the first SSB index by the UE may be permitted based on the number of repeated transmission of the PRACH preamble performed in at least one RO associated with the first SSB index exceeding a specific number of times.

However, this is only an embodiment, and when the number of repeated transmission of the PRACH preamble performed in at least one RO associated with the first SSB index is less than a specific number, the stopping of repeated transmission of the PRACH preamble associated with the first SSB index by the UE may be permitted.

Additionally or alternatively, it may be configured/defined that the stopping of the repeated transmission of the PRACH preamble associated with the first SSB index by the UE is allowed if both conditions related to a specific threshold and a specific number of times for the repeated transmission of the PRACH preamble are satisfied.

For example, if a difference between a first RSRP associated with a first SSB index and a second RSRP associated with a second SSB index exceeds the specific threshold, and the number of repeated transmission of the PRACH preamble performed in at least one RO associated with the first SSB index exceeds (or is less than) the specific number of times, it may be configured/defined that the stopping of the repeated transmission of the PRACH preamble associated with the first SSB index by the UE is allowed.

If the condition related to whether to allow stopping of PRACH preamble repetition transmission is satisfied, the terminal may stop the PRACH preamble repetition transmission that is being performed. Here, the terminal may transmit data (e.g., a specific PRACH preamble) indicating that the PRACH preamble repetition transmission has been stopped in a specific RO.

As an example of the present disclosure, one or more specific random access preamble identifiers (RAPIDs) for reporting the discontinuation of PRACH preamble repetition transmissions may be allocated to the UE by the base station. Based on the PRACH preamble repetition transmissions associated with the first SSB index being discontinued, the UE may transmit a PRACH preamble based on the one or more specific RAPIDs to the base station. For example, the UE may transmit a PRACH preamble based on the one or more specific RAPIDs to the base station at the time when the repeated transmission of the PRACH preamble associated with the first SSB index are discontinued.

That is, when a PRACH preamble based on one or more specific RAPIDs is received, the base station can understand that the UE has stopped repeated transmission of the PRACH preamble associated with the first SSB index.

For example, one or more specific RAPIDs may be determined based on a RAPID initially selected by the UE. That is, one or more specific RAPIDs for stopping repetitive transmission may be defined/determined in conjunction with a RAPID initially selected by the UE.

Additionally or alternatively, a specific RO (mapped to a default uplink beam) may be configured for the UE. Based on the repeated transmission of the PRACH preamble associated with the first SSB index being stopped, the UE may transmit the PRACH preamble to the base station in the specific RO.

That is, a specific RO may mean an RO allocated for reporting repeated transmission of the PRACH preamble. When a PRACH preamble is received in a specific RO, the base station may understand that the UE has stopped repeated transmission of the PRACH preamble associated with the first SSB index.

As an example of the present disclosure, assume a case where switching between uplink indices (i.e., switching between NUL and SUL) is allowed.

The UE may receive a parameter (e.g., 'rsrp-ThresholdSSB-SUL') related to a threshold associated with a SUL carrier from the base station. The UE may determine whether to select a SUL carrier to perform a random access procedure based on 'rsrp-ThresholdSSB-SUL'.

For example, based on a SUL (sidelink uplink) carrier being selected and the first RSRP associated with the first SSB index being changed below a threshold associated with the SUL carrier, the UE may stop repeating transmission of the PRACH preamble associated with the first SSB index and (re)select a NUL (normal uplink) carrier.

As another example, based on a NUL carrier being selected and the first RSRP associated with the first SSB index being changed below a threshold associated with the SUL carrier, the UE may stop repeated transmission of the PRACH preamble associated with the first SSB index and (re)select the SUL carrier.

In another example of the present disclosure, based on a SUL carrier being selected and a first RSRP associated with a first SSB index changes to be less than a threshold associated with the SUL carrier and a variation of the first RSRP (e.g., a difference between a first RSRP value at the time when the PRACH preamble repetition transmission starts and a first RSRP value at the time when the first RSRP value changes to be less than a threshold associated with the SUL carrier) exceeding a predefined value, the UE may stop the repeated transmission of the PRACH preamble associated with the first SSB index and (re)select a NUL carrier.

Based on a NUL carrier being selected and the first RSRP associated with the first SSB index changes below a threshold associated with the SUL carrier and the variation of the first RSRP exceeding a predefined value, the UE may stop repeated transmission of the PRACH preamble associated with the first SSB index and (re)select the SUL carrier.

FIG. 10 is a diagram for describing an uplink transmission operation of a UE in a wireless communication system to which the present disclosure may be applied.

The base station may transmit to the UE configuration information associated with at least one of a specific threshold value or a specific number of times for repeated transmission of a PRACH preamble (S1010).

The base station may transmit to the UE parameters for repeated transmission of the PRACH preamble for PRACH preamble transmission. In addition, the base station may transmit to the UE configuration information associated with at least one of a specific threshold value or a specific number of times for configuring/determining/defining a condition for allowing repeated transmission of the PRACH preamble to be stopped.

The base station may perform repeated reception of a PRACH preamble associated with the first SSB index based on the configuration information (S1020).

If a condition related to repeated PRACH preamble transmissions based on at least one of a specific threshold value or a specific number of times is satisfied, repeated PRACH preamble transmissions associated with the first SSB index performed by the UE may be stopped.

Here, the base station may receive data indicating that the repeated transmission of the PRACH preamble is to be stopped from the UE. An embodiment related to this has been described with reference to FIG. 9, so a duplicate description will be omitted.

Hereinafter, a method for configuring conditions for allowing the stopping of the repeated transmission of the PRACH preamble and a method for a UE to report when the stopping of the repeated transmission of the PRACH preamble are described in detail.

Embodiment 1

Embodiment 1 relates to a method for configuring conditions for allowing the stopping of repeated transmission of the PRACH preamble.

If the base station indicates/configures the UE to repeat PRACH preamble transmission, the UE may perform repeated transmission of the PRACH preamble. While performing repeated transmission of the PRACH preamble, the UE may stop repeat transmission for a specific reason.

For example, the specific reason may include a case where the RSRP (Reference Signals Received Power) value corresponding to the SSB index selected by the UE falls below a specific value, a case where the RSRP value for an SSB index other than the SSB index selected by the UE becomes a predefined value or higher than the RSRP value for the selected SSB index.

Here, if the stopping of the PRACH preamble transmission is allowed, a situation may occur in which a number of UEs frequently stop the repeated transmission of the PRACH preamble and select a different UL beam. Therefore, the base station may configure/indicate the conditions for stopping the repeated transmission of the PRACH preamble.

As an example of the present disclosure, a base station may configure/indicate/define a specific threshold. In this case, the stopping of repeated transmission of a PRACH preamble by a UE may be permitted only when the RSRP difference between each of an old SSB and a new SSB is greater than or equal to the specific threshold.

Specifically, the UE may select an existing SSB and select at least one RO among a plurality of ROs (RACH occasions) corresponding to the selected existing SSB. The UE may perform repeated transmission of a PRACH preamble in at least one RO. The UE may measure RSRP of each of the existing SSB and other SSB(s). If a difference between the RSRP of the existing SSB and the RSRP of a new SSB (i.e., a specific SSB among the SSB(s)) is greater than a threshold value set/instructed/defined by the base station, the UE may stop repeated transmission of a PRACH preamble based on the existing SSB.

That is, if the RSRP difference between the existing SSB and the new SSB is less than a specific threshold, the stopping of the repeated transmission of the PRACH preamble by the UE can be configured/defined so as not to be permitted.

As another example, the base station may configure/define the specific threshold, and the repeated transmission of the PRACH preamble may be allowed to be stopped only when the RSRP of the SSB index itself selected by the UE becomes smaller than the specific threshold.

That is, if the RSRP of the SSB index itself selected by the UE does not become smaller than a specific threshold value, it may be configured/defined so that the repeated transmission of the PRACH preamble interruption is not allowed. In this case, the specific threshold value may be configured smaller than the threshold value (associated with RSRP) for RO selection, but is not limited thereto.

In another example of the present disclosure, if the number of repeated transmissions of the PRACH preamble configured/indicated by the base station (or predefined) is M, the repeated transmission of the PRACH preamble interruption may be configured/defined to be allowed only when the UE has transmitted the PRACH preamble less than (or more than) a certain number of times (e.g., K times) using the RO(s) mapped to the existing SSB. Here, K may be an integer smaller than M.

As another example, it may be configured/defined that repeated transmission of the PRACH preamble interruption is allowed only when the UE transmits the PRACH preamble within (or exceeds) L% of the total number of M repetition transmissions using ROs mapped to the existing SSB.

The above-described methods may be combined to configure/define conditions for allowing the stopping of the repeated transmission of the PRACH preamble. For example, if i) the RSRP difference value between the existing SSB and the new SSB measured by the UE is greater than or equal to the threshold value configured/indicated by the base station (or, predefined), and ii) the PRACH preamble is transmitted K times or less using ROs mapped to the existing SSB, the UE may be allowed to stop repeated transmission of the PRACH preamble.

Embodiment 2

Embodiment 2 relates to a NUL (normal UL)/SUL (supplementary UL) switching method during a RACH procedure.

When the variation of SSB RSRP measured by the UE during the RACH procedure increases and the UE selects a UL beam, it should be considered whether to allow switching between UL indexes (i.e., NUL and SUL).

That is, if switching between UL indices (i.e., NUL/SUL) is not allowed, during the duration in which the UE performs repeated transmission of the PRACH (for a specific SSB index) on the X (e.g., N or S)UL initially selected based on the threshold related to SUL selection (i.e., 'rsrp-ThresholdSSB-SUL'), even if the RSRP of the SSB index or any SSB index changes, the UE may maintain the repeated transmission of the PRACH preamble on the XUL.

That is, even if the RSRP of the corresponding SSB index or any SSB index changes, the UE may maintain the repeated transmission of the PRACH preamble on the corresponding XUL without stopping the PRACH repetition transmission on the corresponding XUL or switching to another Y (e.g., S or N)UL.

Here, the threshold related to SUL selection (i.e., 'rsrp-ThresholdSSB-SUL') may be applied to all BWP and all RACH settings.

As another example, if switching is allowed between UL indices (i.e., between NUL/SUL) (or, switching is configured/indicated by the base station, or the base station receives information about whether switching is possible from switching-capable UEs), the UE/base station operations described below can be performed.

Embodiment 2-1

Assume that the UE selects SUL (or NUL) and performs repeated transmission of the PRACH preamble because the RSRP of the best SSB index A is less than (or greater than) 'rsrp-ThresholdSSB-SUL'.

Here, if the SSB index most preferred by the UE is SSB index A, but the RSRP for the SSB index A is greater than (or less than) 'rsrp-ThresholdSSB-SUL', the UE i) may stop the PRACH preamble repetition transmission being performed and reselect to NUL (or SUL), or ii) may stop the repeated transmission of the PRACH preamble and reselect to NUL (or SUL) only when the RSRP variation (for the SSB index A) is greater than or equal to a specific threshold.

That is, in situation ii), if the RSRP variation (for the corresponding SSB index A) is greater than the specific threshold, the UE may maintain repeated transmission of the PRACH preamble on the SUL (or NUL).

Embodiment 2-2

Assume that the UE selects SUL (or NUL) and performs repeated transmission of the PRACH preamble because the RSRP of the best SSB index A is less than (or greater than) 'rsrp-ThresholdSSB-SUL'.

And, assume that the UE's most preferred SSB index changes from SSB index A to SSB index B, and the RSRP of SSB index A changes to 'rsrp-ThresholdSSB-SUL' or more (or less).

Here, the UE may stop the repeated transmission of the PRACH preamble being performed (based on SSB index A) and reselect with NUL (or SUL) and SSB index B.

As another example, the UE may reselect to NUL (or SUL) and SSB index B only if the RSRP variation (for the corresponding SSB index A) is greater than or equal to the specific threshold. That is, the UE may keep repeated transmission of the PRACH preamble on SUL (or NUL) if the RSRP variation (for the corresponding SSB index A) is less than the specific threshold.

Embodiment 3

It relates to the operation reported by a UE to a base station when repeated transmission of a PRACH preamble is stopped.

When a UE stops repeating PRACH preamble transmission for UL beam change (or to perform RACH procedure again from the beginning), the base station may need to know whether the UE has stopped repeated transmission of the PRACH preamble.

Specifically, assume that a specific UE (e.g., UE 1) is configured/indicated to perform repeated transmission of a PRACH preamble across multiple ROs, but the specific UE stops repeated transmission after transmitting the PRACH preamble in only some of the multiple ROs. In this case, if the base station is not aware of the UE's stopping of repeated transmission, the base station may perform a combining operation (for RAR generation) without being able to check whether the PRACH preamble is transmitted in the remaining ROs.

Here, if any UE (e.g. UE 2) performs a transmission operation using the preamble index that UE 1 attempted to transmit in the remaining RO among multiple ROs (Here, the RA-RNTI of the RAR expected by UE 1 and UE 2 are the same), the base station may transmit the RAR by determining that UE 1 is continuously transmitting the PRACH preamble.

Accordingly, the UE 2 may receive the RAR transmitted by the base station, and the initial access procedure may proceed in a direction not intended by the base station. Therefore, the base station needs to be informed of whether the UE has stopped repeat transmission.

As an example of the present disclosure, a base station may configure specific RACH resources that can be used when repeated transmission of the PRACH preamble is stopped for UE(s) performing repeated transmission of the PRACH preamble.

For example, the base station may pre-allocate one or more RAPIDs (i.e., preamble indexes) among multiple ROs for repeated transmission of the PRACH preamble to the UE(s) to be used for reporting the stopping of repeated transmission. The UE(s) may transmit a preamble using the predetermined RAPID at the time point when it is to stop the repeated transmission of the PRACH preamble. Accordingly, the base station may confirm that the UE(s) stop the repeated transmission of the PRACH preamble by receiving the preamble using the predetermined RAPID.

Here, in order for UEs performing repeated transmission of the PRACH preamble to be distinguished from each other, the base station may allocate a different RAPID to each UE (for reporting PRACH preamble repetition transmission interruption). The RAPID may be defined in advance by linking to the RAPID value initially selected by the UE performing repeated transmission of the PRACH preamble.

As another example, the base station may separately configure/indicate the UE to use a different RO (e.g., an RO mapped to a default UL beam) other than the RO(s) for repeated transmission of the PRACH preamble. When the UE that wants to stop repeated transmission of the PRACH preamble performs an operation of transmitting a preamble to the corresponding RO, the base station may confirm that the UE has stopped repeated transmission of the PRACH preamble.

The above-described embodiments can be set/applied to other UL signals/channels such as Msg. 3 PUSCH, MSGA preamble/PUSCH and/or PUSCH/PUCCH. That is, in the above-described embodiments, the 'PRACH preamble' can be replaced with other UL signals/channels such as Msg. 3 PUSCH, MSGA preamble/PUSCH and/or PUSCH/-PUCCH. In addition, it is obvious that the above-described embodiments can also be included as one of the implementation methods of the present disclosure, and thus can be considered as a kind of embodiments.

In addition, the above-described embodiments may be implemented independently, but may also be implemented in the form of a combination (or merge) of some embodiments. Information on whether the above-described embodiments are applicable (or information on rules of the embodiments) may be defined so that a rule is defined so that the base station notifies the UE through a predefined signal (e.g., a physical layer signal or a higher layer signal). The higher layer may include, for example, one or more of functional layers such as MAC, RLC, PDCP, RRC, and SDAP.

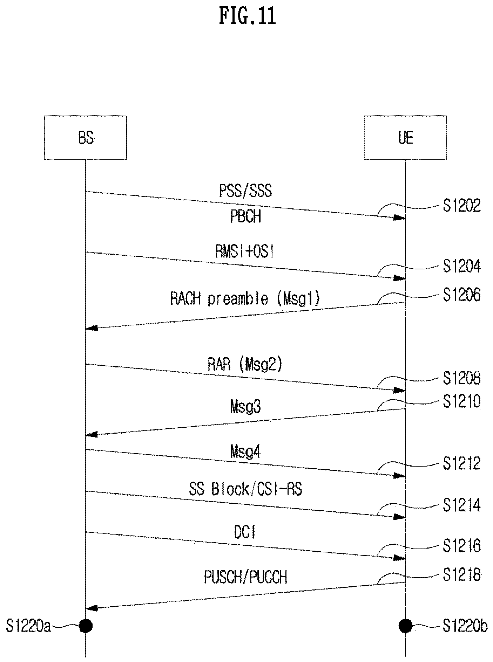

FIG. 11 is a diagram for describing a signaling procedure of a network side and a terminal according to one embodiment of the present disclosure.

FIG. 11 illustrates an example of signaling between a network side and a terminal (UE) in an M-TRP situation to which any of the examples of the present disclosure described above (e.g., one or more combinations of Embodiment 1, Embodiment 2, Embodiment 2-1, Embodiment 2-2, Embodiment 3 or detailed examples thereof) may be applied.

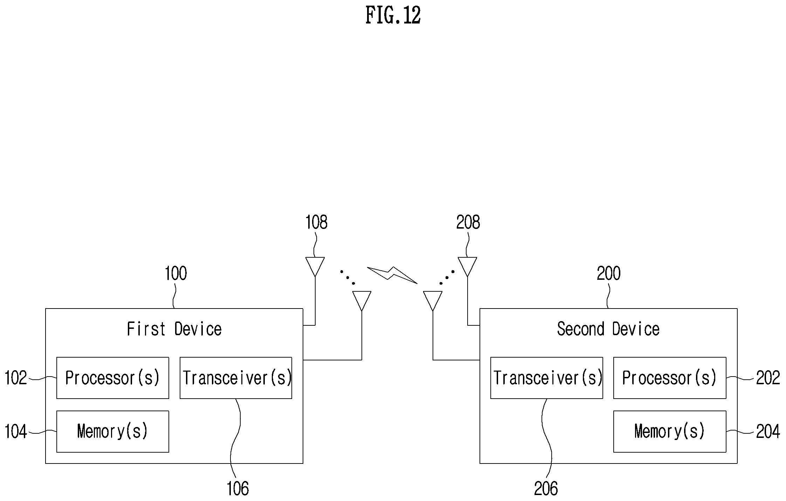

Here, the UE/network side is an example and may be replaced with various devices as described with reference to FIG. 12. FIG. 11 is for convenience of explanation and does not limit the scope of the present disclosure. Additionally, some step(s) shown in FIG. 11 may be omitted depending on the situation and/or settings. Additionally, in the operation of the network side/UE in FIG. 11, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU). For example, ideal/non-ideal backhaul may be set between TRP 1 and TRP 2, which constitute the network side. In addition, the following description is based on multiple TRPs, but it can be equally extended and applied to transmission through multiple panels/cells, and can also be extended and applied to transmission through multiple RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., a CORESET index, an ID).

For example, if a single UE is configured to transmit and receive with multiple TRPs (or cells), this may mean that multiple CORESET groups (or CORESET pools) are configured for the single terminal. The configuration of such CORESET groups (or CORESET pools) may be performed via higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

Referring to Fig. 12, a base station (e.g., BS) may periodically transmit SSB to a terminal (S1202). Here, the SSB may include PSS/SSS/PBCH. The base station may transmit SSB to a UE using beam sweeping.

The base station may transmit remaining minimum system information (RMSI) and other system information (OSI) to the terminal (S1204). RMSI may include information required for the terminal to initially access the base station (e.g., PRACH configuration information). Here, the UE may identify the best SSB after performing SSB detection.

Thereafter, the UE may transmit a RACH preamble (Message 1, Msg1) to the base station using the PRACH resource linked/corresponding to the index (i.e., beam) of the best SSB (S1206).

The beam direction of the RACH preamble may be associated with a PRACH resource. The association between the PRACH resource (and/or the RACH preamble) and the SSB index can be established via system information (e.g., RMSI).

Here, the UE may perform PRACH preamble repetition transmission. The UE may perform PRACH preamble repetition transmission based on configuration information related to PRACH repetition transmission received from the base station.

Thereafter, as part of the RACH process, the base station may transmit a Random Access Response (RAR) (Msg2) to the terminal in response to the PRACH preamble (S1208).

The RAR may include at least one of a field related to PUSCH repeated transmission, a field for indicating whether to repeat PUSCH preamble transmission, or a PUSCH time/frequency resource field.

The UE may transmit Msg. 3 PUSCH (e.g., RRC Connection Request) using the uplink grant in the RAR (S1210).

The UE may perform PUSCH repeated transmission based on RAR. Here, the number of PUSCH repeated transmissions may be based on the number of PRACH preamble repeated transmissions.

The base station may transmit a contention resolution message (Msg4) to the terminal (S1212). Msg4 may include RRC connection setup.

When an RRC connection is established between a base station and a UE through the RACH process, subsequent beam alignment may be performed based on SSB/CSI-RS (in downlink) and SRS (in uplink). For example, the UE may receive SSB/CSI-RS (S1214). SSB/CSI-RS may be used by the UE to generate beam/CSI report.

And, the base station may request the UE to report beam/CSI through DCI (S1216). Here, the UE may generate the beam/CSI report based on SSB/CSI-RS and transmit the generated beam/CSI report to the base station through PUSCH/PUCCH (S1218). The beam/CSI report may include beam measurement results, information about preferred beams, etc. The base station and the UE may switch beams based on the beam/CSI report (S1220a, S1220b).

Thereafter, the UE and the base station may perform the embodiments described/proposed above. For example, the UE and the base station may process information in the memory and transmit a wireless signal or process a received wireless signal and store it in the memory based on the configuration information obtained in the network access procedure (e.g., system information acquisition procedure, RRC connection procedure via RACH, etc.) according to the embodiment of the present disclosure. Here, the wireless signal may include at least one of PDCCH, PDSCH, and RS (Reference Signal) in the case of downlink, and at least one of PUCCH, PUSCH, and SRS in the case of uplink.

General Device to which the Present Disclosure may be applied

FIG. 12 is a diagram which illustrates a block diagram of a wireless communication system according to an embodiment of the present disclosure.

In reference to FIG. 12, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206.

One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure. One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

    receiving configuration information associated with at least one of a specific threshold value or a specific number of times for repeated transmission of a physical random access channel (PRACH) preamble from a base station; and
    performing repeated transmission of a PRACH preamble associated with a first synchronization signal block (SSB) index based on the configuration information,
    based on a difference between a first RSRP (reference signal received power) associated with the first SSB index and a second RSRP associated with a second SSB index exceeding the specific threshold, stopping of repeated transmission of the PRACH preamble associated with the first SSB index by the UE is permitted.

2. The method of claim 1, wherein:
    based on the difference between the first RSRP associated with the first SSB index and the second RSRP associated with the second SSB index being less than or equal to the specific threshold, the stopping of the repeated transmission of the PRACH preamble associated with the first SSB index is not permitted.

3. The method of claim 1, wherein:
    based on a number of repeated transmissions of a PRACH preamble performed in at least one RO associated with the first SSB index exceeding the specific number of times, the stopping of the repeated transmission of the PRACH preamble associated with the first SSB index by the UE is permitted.

4. The method of claim 1, wherein:

    at least one specific RAPID (random access preamble identifiers) is allocated to report the stopping of repeated transmission of the PRACH preamble, and
    based on the stopping of repeated transmission of the PRACH preamble associated with the first SSB index, a PRACH preamble based on the at least one specific RAPIDs is transmitted to the base station.

5. The method of claim 4, wherein:

    the at least one specific RAPID is determined based on a RAPID initially selected by the UE, and
    a PRACH preamble based on the at least one specific RAPID is transmitted to the base station at a time when the repeated transmission of the PRACH preamble associated with the first SSB index is stopped.

6. The method of claim 1, wherein:

    a specific RO mapped to a default uplink beam is configured for the UE, and
    a PRACH preamble is transmitted to the base station from the specific RO based on the repeated transmission of the PRACH preamble associated with the first SSB index being stopped.

7. The method of claim 1, wherein:
based on a switching of uplink index being allowed:

based on a sidelink uplink (SUL) carrier being selected and a first RSRP associated with the first SSB index being changed to be less than a threshold associated with the SUL carrier, the repeated transmission of the PRACH preamble associated with the first SSB index is stopped and a normal uplink (NUL) carrier is selected, and based on the NUL carrier being selected and a first RSRP associated with the first SSB index being changed to be less than a threshold associated with the SUL carrier, the repeated transmission of the PRACH preamble associated with the first SSB index is stopped and the SUL carrier is selected.

8. The method of claim 1, wherein:
based on a switching of uplink index being allowed:

based on a SUL carrier being selected and a first RSRP associated with the first SSB index changes to be less than a threshold associated with the SUL carrier and a variation of the first RSRP exceeding a predefined value, the repeated transmission of the PRACH preamble associated with the first SSB index is stopped and a NUL carrier is selected,
based on the NUL carrier being selected and a first RSRP associated with the first SSB index changes to be less than a threshold associated with the SUL carrier and a variation of the first RSRP exceeding a predefined value, the repeated transmission of the PRACH preamble associated with the first SSB index is stopped and the SUL carrier is selected.

9. The method of claim 1, wherein:
the specific threshold value is a value smaller than a threshold associated with at least one RO selection for repeated transmission of a PRACH preamble.

10. A user equipment (UE) performing communication in a wireless communication system, the UE comprising:

at least one transceiver; and
at least one processor connected to the at least one transceiver,
wherein the at least one processor is configured to:

receive configuration information associated with at least one of a specific threshold value or a specific number of times for repeated transmission of a physical random access channel (PRACH) preamble from a base station through the at least one transceiver; and
perform repeated transmission of a PRACH preamble associated with a first synchronization signal block (SSB) index based on the configuration information,
based on a difference between a first RSRP (reference signal received power) associated with the first SSB index and a second RSRP associated with a second SSB index exceeding the specific threshold, stopping of repeated transmission of the PRACH preamble associated with the first SSB index by the UE is permitted.

11. A method performed by a base station in a wireless communication system, the method comprising:

transmitting configuration information associated with at least one of a specific threshold value or a specific number of times for repeated transmission of a physical random access channel (PRACH) preamble to a user equipment (UE); and
performing repeated reception of a PRACH preamble associated with a first synchronization signal block (SSB) index based on the configuration information,
wherein based on a difference between a first RSRP (reference signal received power) associated with the first SSB index and a second RSRP associated with a second SSB index exceeding the specific threshold, stopping of repeated transmission of the PRACH preamble associated with the first SSB index by the UE is permitted.

12. A base station performing communication in a wireless communication system, the base station comprising:

at least one transceiver; and
at least one processor connected to the at least one transceiver,
wherein the at least one processor is configured to:

transmit configuration information associated with at least one of a specific threshold value or a specific number of times for repeated transmission of a physical random access channel (PRACH) preamble to a user equipment (UE) through the at least one transceiver; and

perform repeated reception of a PRACH preamble associated with a first synchronization signal block (SSB) index based on the configuration information,

wherein based on a difference between a first RSRP (reference signal received power) associated with the first SSB index and a second RSRP associated with a second SSB index exceeding the specific threshold, stopping of repeated transmission of the PRACH preamble associated with the first SSB index by the UE is permitted.

13. A processing device configured to control a user equipment (UE) in a wireless communication system, the processing device comprising:

at least one processor; and

at least one computer memory operatively coupled to the at least one processor and storing instructions for performing operations upon being executed by the at least one processor;

the operations include:

receiving configuration information associated with at least one of a specific threshold value or a specific number of times for repeated transmission of a physical random access channel (PRACH) preamble from a base station; and

performing repeated transmission of a PRACH preamble associated with a first synchronization signal block (SSB) index based on the configuration information,

based on a difference between a first RSRP (reference signal received power) associated with the first SSB index and a second RSRP associated with a second SSB index exceeding the specific threshold, stopping of repeated transmission of the PRACH preamble associated with the first SSB index by the UE is permitted.

14. At least one non-transitory computer readable medium storing at least one instruction,

based on the at least one instruction being executed by at least one processor, an apparatus for performing communication in a wireless communication system controls to:

receive configuration information associated with at least one of a specific threshold value or a specific number of times for repeated transmission of a physical random access channel (PRACH) preamble from a base station; and

perform repeated transmission of a PRACH preamble associated with a first synchronization signal block (SSB) index based on the configuration information,

based on a difference between a first RSRP (reference signal received power) associated with the first SSB index and a second RSRP associated with a second SSB index exceeding the specific threshold, stopping of repeated transmission of the PRACH preamble associated with the first SSB index by the UE is permitted.

# FIG.1

# FIG.2

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$  $l = 14 \cdot 2^{\mu} - 1$

# FIG.4

# FIG.5

# FIG.6

EP 4 557 626 A1

## FIG.7

(a)                    (b)

## FIG.8

# FIG.9

RECEIVING CONFIGURATION INFORMATION
ASSOCIATED WITH AT LEAST ONE OF A
SPECIFIC THRESHOLD VALUE OR A SPECIFIC
NUMBER OF TIMES FOR REPEATED
TRANSMISSION OF A PRACH PREAMBLE FROM
THE BASE STATION —— S910

PERFORMING REPEATED TRANSMISSION OF A
PRACH PREAMBLE ASSOCIATED WITH A FIRST
SSB INDEX BASED ON THE CONFIGURATION
INFORMATION —— S920

# FIG.10

TRANSMITTING CONFIGURATION INFORMATION
ASSOCIATED WITH AT LEAST ONE OF A
SPECIFIC THRESHOLD VALUE OR A SPECIFIC
NUMBER OF TIMES FOR REPEATED
TRANSMISSION OF A PRACH PREAMBLE TO
THE UE —— S1010

PERFORMING REPEATED RECEPTION OF A
PRACH PREAMBLE ASSOCIATED WITH THE
FIRST SSB INDEX BASED ON THE
CONFIGURATION INFORMATION —— S1020

# FIG.11

# FIG.12

## INTERNATIONAL SEARCH REPORT

| International application No. |
|---|
| **PCT/KR2023/009394** |

**A. CLASSIFICATION OF SUBJECT MATTER**

**H04B 7/06**(2006.01)i; **H04W 74/08**(2009.01)i; **H04W 74/00**(2009.01)i; **H04B 7/0408**(2017.01)i; **H04W 24/08**(2009.01)i; **H04L 1/08**(2006.01)i

According to International Patent Classification (IPC) or to both national classification and IPC

**B. FIELDS SEARCHED**

Minimum documentation searched (classification system followed by classification symbols)

H04B 7/06(2006.01); H04J 11/00(2006.01); H04L 5/00(2006.01); H04W 72/04(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 물리 랜덤 접속 채널(physical random access channel), 동기 신호 블록 (synchronization signal block), RSRP(reference signal received power), 반복 전송(repetition transmission), 중단(stop)

**C. DOCUMENTS CONSIDERED TO BE RELEVANT**

| Category* | Citation of document, with indication, where appropriate, of the relevant passages | Relevant to claim No. |
|---|---|---|
| A | WO 2022-077293 A1 (APPLE INC.) 21 April 2022 (2022-04-21)<br>See paragraph [0040]; claims 1-2; and figures 4-6. | 1-14 |
| A | WO 2022-030948 A1 (LG ELECTRONICS INC.) 10 February 2022 (2022-02-10)<br>See claims 1-2. | 1-14 |
| A | KR 10-2019-0098595 A (INNOVATIVE TECHNOLOGY LAB CO., LTD.) 22 August 2019 (2019-08-22)<br>See paragraphs [0155]-[0166]; claim 1; and figure 4. | 1-14 |
| A | WO 2020-050660 A1 (SAMSUNG ELECTRONICS CO., LTD.) 12 March 2020 (2020-03-12)<br>See paragraphs [0059]-[0061]; claim 1; and figure 1. | 1-14 |
| A | US 11147104 B2 (APPLE INC.) 12 October 2021 (2021-10-12)<br>See column 5, line 7 - column 6, line 32; claim 1; and figure 3. | 1-14 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 October 2023** | **16 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2023/009394**

| Patent document cited in search report | | | Publication date (day/month/year) | Patent family member(s) | | | Publication date (day/month/year) |
|---|---|---|---|---|---|---|---|
| WO | 2022-077293 | A1 | 21 April 2022 | CN | 116326143 | A | 23 June 2023 |
| | | | | US | 2022-0312498 | A1 | 29 September 2022 |
| | | | | WO | 2022-077293 | A8 | 11 August 2022 |
| WO | 2022-030948 | A1 | 10 February 2022 | EP | 4191927 | A1 | 07 June 2023 |
| | | | | KR | 10-2023-0042269 | A | 28 March 2023 |
| KR | 10-2019-0098595 | A | 22 August 2019 | CN | 111788861 | A | 16 October 2020 |
| | | | | EP | 3753357 | A1 | 23 December 2020 |
| | | | | EP | 3753357 | A4 | 01 December 2021 |
| | | | | KR | 10-2023-0007263 | A | 12 January 2023 |
| | | | | KR | 10-2478435 | B1 | 15 December 2022 |
| | | | | US | 10880925 | B2 | 29 December 2020 |
| | | | | US | 11647541 | B2 | 09 May 2023 |
| | | | | US | 2019-0254071 | A1 | 15 August 2019 |
| | | | | US | 2021-0112596 | A1 | 15 April 2021 |
| | | | | US | 2023-0262767 | A1 | 17 August 2023 |
| | | | | WO | 2019-160316 | A1 | 22 August 2019 |
| WO | 2020-050660 | A1 | 12 March 2020 | KR | 10-2020-0027908 | A | 13 March 2020 |
| | | | | US | 11202320 | B2 | 14 December 2021 |
| | | | | US | 2020-0077446 | A1 | 05 March 2020 |
| US | 11147104 | B2 | 12 October 2021 | US | 2019-0268947 | A1 | 29 August 2019 |

Form PCT/ISA/210 (patent family annex) (July 2022)